# DEMANDE DE BREVET EUROPEEN

(11) **EP 2 884 159 A1**
(43) Date de publication de la demande: **17.06.2015**
(21) Numéro de dépôt: 14194059.3
(22) Date de dépôt: 20.11.2014
(51) Int. Cl.: F21V 7/16, G02B 7/02

(54) **Luminaire à photométrie ajustable**

(30) Priorité: 13.12.2013 FR 1362588
(71) Demandeur: Lucibel SA, 92500 Rueil Malmaison (FR)
(72) Inventeur: Houot, Jean-Laurent, 38110 Saint Clair de la Tour (FR)
(74) Mandataire: Martin, Marie-Aude

(57) **Abrégé**

Luminaire (1) à photométrie ajustable, comprenant une source (2) lumineuse, une optique (4) déformable, un support (6) destiné à supporter l'optique (4), et des moyens de déformation de l'optique (4), caractérisé en ce que les moyens de déformation comprennent une tige (8) mobile par rapport au support (6), la tige (8) mobile comprenant une tête (10) d'appui conformée pour appuyer contre l'optique (4) lorsque la tige (8) est déplacée par rapport au support (6), en ce que l'optique (4) comprend une surface de contre-appui contre laquelle est destinée à venir en appui la tête (10) d'appui, et en ce que l'optique (4) comprend un alésage à l'intérieur duquel s'étend la tige (8) mobile.

## Description

La présente invention concerne un luminaire à photométrie variable.

Les luminaires à photométrie variable comprennent traditionnellement une source lumineuse, une optique déformable et des moyens pour déformer cette optique. La déformation de l'optique modifie, en sortie du luminaire, l'angle du faisceau de lumière émis par la source lumineuse, par exemple en élargissant l'angle de ce faisceau ou en diminuant l'angle de ce faisceau.

Selon le document de brevet US2006062000, les moyens de déformation de l'optique comprennent une électrode à laquelle est appliquée une tension électrique pour générer un champ électromagnétique permettant d'exercer une force sur une membrane déformable distante de l'électrode.

Selon le document de brevet US2006072181, les moyens de déformation de l'optique comprennent un film polymère servant de support à une lentille déformable et deux électrodes agencées sur des faces opposées du film polymère. Lorsqu'une tension électrique est appliquée entre les deux électrodes, cela provoque la déformation du film polymère et par conséquent la déformation de la lentille supportée par ce film polymère.

Les solutions traditionnelles pour déformer une optique reposent cependant sur l'application d'un champ électrique ou électromagnétique, et peuvent être par conséquent sensibles aux conditions de l'environnement extérieur, ce qui peut altérer la stabilité du réglage de la photométrie. Ce réglage peut aussi être altéré du fait de la chaleur générée par le luminaire en fonctionnement, cette chaleur pouvant provoquer la dilatation de composants en contact avec l'optique.

Les solutions traditionnelles sont en outre parfois encombrantes, compte-tenu de la quantité ou de l'agencement des composants utilisés pour déformer l'optique. Elles peuvent aussi être coûteuses.

Aussi la présente invention vise à pallier tout ou partie de ces inconvénients en proposant un luminaire à photométrie ajustable, économique, compact, et offrant la possibilité de maîtriser avec précision et de façon stable la déformation de l'optique, donc le réglage de la photométrie en sortie du luminaire.

A cet effet, la présente invention a pour objet un luminaire à photométrie ajustable, comprenant une source lumineuse, une optique déformable, un support destiné à supporter l'optique, et des moyens de déformation de l'optique, caractérisé en ce que les moyens de déformation comprennent une tige mobile par rapport au support, la tige mobile comprenant une tête d'appui conformée pour appuyer contre l'optique lorsque la tige est déplacée par rapport au support, en ce que l'optique comprend une surface de contre-appui contre laquelle est destinée à venir en appui la tête d'appui, et en ce que l'optique comprend un alésage à l'intérieur duquel s'étend la tige mobile.

Ainsi, le luminaire selon l'invention offre une solution mécanique de déformation de l'optique par contact et déplacement de la tige contre l'optique, ce qui limite la sensibilité aux conditions de l'environnement extérieur.

De plus, l'alésage à l'intérieur duquel s'étend la tige assure une compacité améliorée.

Selon un mode de réalisation préféré, l'optique comprend une surface de sortie, par laquelle la lumière émise par la source lumineuse est destinée à sortir du luminaire, et l'alésage ménagé dans l'optique est sensiblement agencé au centre de la surface de sortie.

Ainsi, une pression centrale est exercée par la tête d'appui sur l'optique, ce qui augmente la sensibilité du réglage de la photométrie et permet de réduire la course de la tige pour bénéficier d'un luminaire plus compact.

Selon un mode de réalisation préféré, l'alésage ménagé dans l'optique comprend un épaulement délimitant la surface de contre-appui, et l'alésage est conformé pour contenir intégralement la tête d'appui.

Ainsi, la tête d'appui ne fait pas saillie hors de l'optique, mais est complètement intégrée dans le volume de l'optique. De cette façon, le luminaire offre un encombrement limité.

Selon un mode de réalisation avantageux, l'optique comprend une surface de maintien en appui permanent contre le support, la surface de maintien étant opposée à la surface de sortie et à la surface de contre-appui.

Ainsi, l'optique est prise en étau entre la tête d'appui et le support.

Il en résulte un affaissement, un écrasement de l'optique entre la tête d'appui et le support lorsque la tige mobile est déplacée en direction du support. Cette déformation par affaissement contribue à davantage de compacité.

Selon un mode de réalisation préféré, la tige comprend un premier filetage et le luminaire comprend un deuxième filetage destiné à coopérer avec le premier filetage pour provoquer le déplacement de la tige.

Ainsi, une rotation de la tige autour de l'axe selon lequel elle s'étend provoque, par coopération du premier et du deuxième filetage, la translation de la tige par rapport au support. Ce déplacement hélicoïdal augmente la précision de la déformation de l'optique, donc le réglage de la photométrie.

Avantageusement, l'alésage de l'optique est traversant, et le support comprend un alésage coaxial avec l'alésage ménagé dans l'optique, la tige mobile étant destinée à s'étendre dans l'alésage du support.

Cet agencement présente l'avantage d'un encombrement limité, ne nécessite pas l'usage de pièces mécaniques supplémentaires pour déformer l'optique, ce qui réduit les coûts, et permet, du fait du caractère traversant de l'alésage, d'offrir une amplitude importante de déplacement de la tige, donc de réglage de la photométrie.

De manière avantageuse, le luminaire comprend un dissipateur thermique, et le dissipateur thermique comprend un alésage coaxial avec l'alésage ménagé dans l'optique, et la tige mobile est destinée à s'étendre dans l'alésage du dissipateur thermique.

Le dissipateur thermique évite une dilatation excessive du support ou de la tige mobile sous l'effet de la chaleur, et empêche donc avantageusement une déformation parasite de l'optique pouvant résulter de la dilatation du support ou de la tige qui sont au contact de l'optique. Ces caractéristiques permettent donc d'améliorer la précision dans la durée du réglage de la photométrie, tout en offrant un encombrement limité du fait des alésages de l'optique, du support et du dissipateur thermique, à travers lesquels s'étend la tige mobile. Cette configuration offre aussi une plage de réglage importante.

De manière avantageuse, le dissipateur thermique comprend une pluralité d'éléments longitudinaux de dissipation thermique destinés à augmenter la surface d'échange thermique, et la pluralité d'éléments longitudinaux de dissipation thermique délimite entre ces éléments un espace agencé dans le prolongement de l'alésage du dissipateur thermique pour permettre à une extrémité de la tige mobile d'être déplacée entre ces éléments.

Les ailettes permettent avantageusement de limiter la dilatation de la tige mobile et du support, ce qui permet d'empêcher une déformation parasite de l'optique. Le luminaire, en fonctionnement, offre ainsi un réglage stable, fiable, de la photométrie.

Selon un mode de réalisation préféré, l'optique est conformée pour délimiter avec le support une cavité à l'intérieur de laquelle est destinée à être agencée la source lumineuse.

Ainsi, le luminaire selon l'invention offre une compacité améliorée.

Avantageusement, l'optique comprend une rainure s'étendant à l'intérieur de la cavité formée entre l'optique et le support.

Cette rainure augmente la sensibilité de l'optique à la déformation. Par conséquent, la rainure permet une déformation maximale de l'optique pour un déplacement minimal de la tige mobile. Cela permet de réduire la longueur de la tige, et permet donc d'augmenter la compacité du luminaire.

D'autres caractéristiques et avantages de la présente invention ressortiront clairement de la description ci-après d'un mode particulier de réalisation, donné à titre d'exemple non limitatif, en référence aux dessins annexés dans lesquels :
- La figure 1 est une vue de côté d'un luminaire selon un mode de réalisation de l'invention,
- La figure 2 est une vue en coupe selon la ligne I - I de la figure 1,
- La figure 3 montre l'optique du luminaire selon un mode de réalisation de l'invention, dans un état déformé.

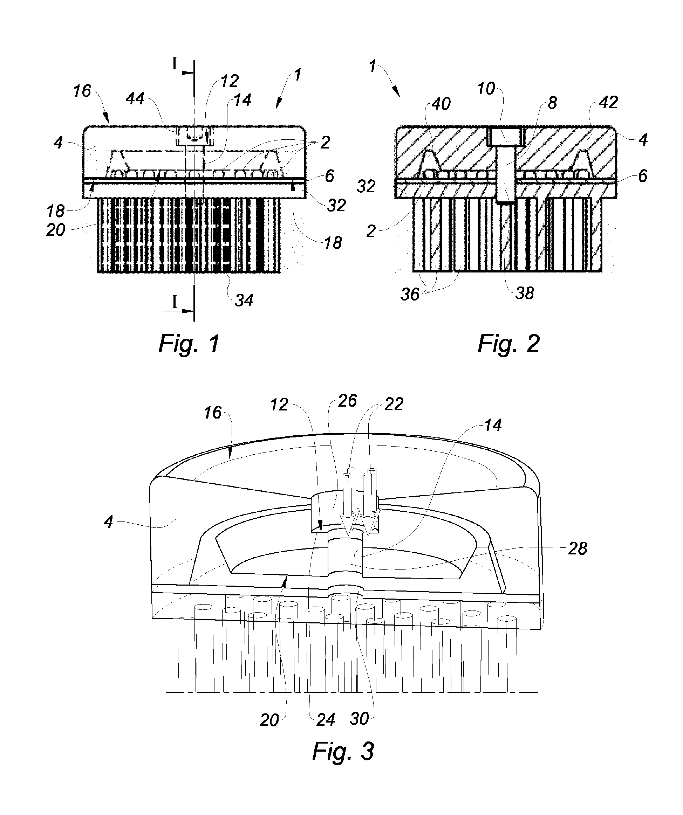

La figure 1 montre un luminaire 1 selon un mode de réalisation de l'invention. Le luminaire 1 est à photométrie variable, c'est-à-dire qu'un utilisateur peut faire varier l'angle d'un faisceau de lumière émis en sortie du luminaire 1.

Le luminaire 1 comprend une source 2 lumineuse, une optique 4 déformable, un support 6, destiné à supporter l'optique 4, et des moyens de déformation, destinés à déformer l'optique 4 afin de faire varier l'angle du faisceau de lumière en sortie du luminaire 1.

Comme cela est plus particulièrement visible sur la figure 2, les moyens de déformation comprennent une tige 8 mobile par rapport au support 6. La tige 8 mobile comprend une tête 10 d'appui conformée pour appuyer contre l'optique 4 lorsque la tige 8 est déplacée par rapport au support 6.

On notera que les moyens de déformation peuvent comprendre une unique tige 8 mobile pour limiter le nombre de pièces. Les moyens de déformation peuvent par ailleurs correspondre à des moyens exclusivement mécaniques de déformation. Autrement dit, aucun champ électrique ou électromagnétique n'est nécessaire à la déformation de l'optique.

La tige 8 est ici agencée de façon sensiblement perpendiculaire au support 6.

La tige 8 est de préférence translucide ou transparente.

Comme on peut le voir sur la figure 1, l'optique 4 comprend une surface 12 de contre-appui, contre laquelle est destinée à venir en appui la tête 10 d'appui.

L'optique 4 comprend également un alésage 14 à l'intérieur duquel s'étend la tige 8 mobile.

On notera que l'optique 4 est avantageusement solide et élastique. Elle peut par exemple être en polycarbonate. Elle peut être translucide ou transparente.

L'optique 4 peut correspondre à une pièce de révolution.

L'optique 4 peut correspondre à une lentille, notamment une lentille convergente ou divergente.

La tige 8 mobile s'étend et se déplace le cas échéant selon un axe sensiblement parallèle à l'axe de révolution de l'optique 4. Cet axe peut correspondre à l'axe de révolution de l'optique 4.

En particulier, l'optique 4 peut par ailleurs présenter une forme sensiblement cylindrique, comme cela est visible sur les figures 1 à 3.

L'optique 4 comprend notamment une surface 16 de sortie, par laquelle la lumière émise par la source 2 lumineuse est destinée à sortir du luminaire 1. La surface 16 de sortie peut être sensiblement circulaire. La surface 16 de sortie peut être sensiblement plane en position de repos illustrée aux figures 1 et 2, c'est-à-dire en l'absence de contrainte exercée par la tige 8 mobile, et concave lorsque la tige 8 est déplacée vers le support 6 et appuie contre l'optique 4, comme on peut le voir sur la figure 3.

La surface 12 de contre-appui et la surface 16 de sortie sont avantageusement distinctes. En d'autres termes, la surface 12 de contre-appui ne correspond pas à une partie de la surface 16 de sortie. Ainsi, la tête 10 d'appui n'appuie pas directement contre la surface 16 de sortie.

Selon l'exemple des figures 1 à 3, l'optique 4 comprend une surface 18 de maintien qui est en appui contre le support 6 pour maintenir l'optique 4. La surface 18 de maintien peut être ainsi fixée au support 6, par exemple par de la colle.

La surface 18 de maintien est opposée à la surface 16 de sortie et à la surface 12 de contre-appui pour permettre une prise en étau de l'optique 4 entre la tête 10 d'appui et le support 6.

L'optique peut comprendre une surface 20 de compression, agencée à distance du support 6 lorsque l'optique est au repos, comme c'est le cas sur les figures 1 et 2. La surface 20 de compression est destinée à venir en appui contre le support 6 à partir du moment où la tige 8 mobile, déplacée en direction du support, atteint une position prédéterminée.

La surface 20 de compression est distincte de la surface 18 de maintien. Elle peut être opposée aux surfaces 12, 16 de contre-appui et de sortie.

La surface 20 de compression permet dans un premier temps un affaissement central de l'optique 4 déformable puis, dans un deuxième temps, une compression et extension radiale de l'optique 4 déformable lorsque la surface 20 de compression vient en appui contre le support 6.

L'alésage 14 ménagé dans l'optique 4 est sensiblement agencé au centre de la surface de sortie, pour que la tête 10 d'appui exerce sur l'optique une pression sensiblement centrale illustrée par les flèches 22 de la figure 3.

Il débouche avantageusement sur la surface 16 de sortie, ce qui rend la tête 10 d'appui accessible.

L'alésage 14 peut déboucher aussi du côté de l'optique opposé à au côté où se situe la surface 16 de sortie. Ainsi, l'alésage peut déboucher vers le support 6. Ainsi, l'alésage 14 est avantageusement traversant; il traverse l'optique 4 de part en part.

Selon l'exemple illustré aux figures 1 à 3, l'alésage 14 ménagé dans l'optique 4 comprend un épaulement 24 délimitant la surface 12 de contre-appui. De plus, l'alésage 14 est conformé pour contenir intégralement la tête 10 d'appui, comme on peut le voir par exemple sur les figures 1 et 2.

Plus précisément, l'alésage 14 peut comprendre un premier tronçon 26, destiné à contenir l'intégralité de la tête 10 d'appui, et un deuxième tronçon 28, destiné à recevoir la tige 8, et les premier et deuxième tronçons sont de diamètre différents, le diamètre du deuxième tronçon 28 étant inférieur à celui du premier tronçon 26, si bien que les tronçons 26, 28 sont séparés par l'épaulement 24. Le premier tronçon débouche ici sur la surface 16 de sortie et le deuxième tronçon vers le support 6.

La tige 8 comprend avantageusement un premier filetage, extérieur, et le luminaire 1 comprend un deuxième filetage destiné à coopérer avec le premier filetage pour provoquer le déplacement de la tige 8. Ainsi, une rotation de la tige 8 autour de l'axe selon lequel elle s'étend provoque la translation de la tige 8 par rapport au support 6.

Selon l'exemple de réalisation visible sur les figures 1 à 3, le support 6 comprend aussi un alésage 30, traversant, dans lequel s'étend la tige 8 mobile. L'alésage 30 est agencé dans l'alignement de l'alésage 14 ménagé dans l'optique 4.

Le luminaire 1 peut en outre comprendre un dissipateur 32 thermique, et le dissipateur 32 thermique peut comprendre un alésage 34, traversant, agencé dans l'alignement de l'alésage 30 du support et de l'alésage 14 de l'optique 4, la tige 8 mobile étant destinée à s'étendre également dans l'alésage du dissipateur 32 thermique.

Le deuxième filetage du luminaire 1 peut être ménagé à l'intérieur de l'alésage 30 du support 6 et/ou de l'alésage 34 du dissipateur 32 thermique.

Le dissipateur 32 thermique comprend avantageusement une pluralité d'éléments 36 longitudinaux de dissipation thermique, comme des ailettes, destinés à augmenter la surface d'échange thermique, et la pluralité d'éléments 36 longitudinaux de dissipation thermique délimite entre ces éléments un espace agencé dans le prolongement de l'alésage 34 du dissipateur 32 thermique pour permettre à une extrémité 38 de la tige mobile d'être déplacée entre ces éléments 36.

Comme on peut le voir plus particulièrement sur la figure 2, l'optique 4 est conformée pour délimiter avec le support 6 une cavité à l'intérieur de laquelle est destinée à être agencée la source 2 lumineuse.

De plus, l'optique 4 peut comprendre une rainure 40 s'étendant à l'intérieur de la cavité formée entre l'optique 4 et le support 6. Cette rainure 40 peut présenter un profil transverse en V. Elle peut être circulaire.

La rainure 40 peut faire le tour de la surface 20 de compression, si bien que la surface 20 de compression est agencée sensiblement au centre de l'optique, du côté opposé à celui où s'étend la surface 16 de sortie.

La rainure 40 s'étend par exemple entre la surface 18 de maintien et la surface 20 de compression et les sépare.

Comme on peut le voir sur la figure 2, la rainure 40 définit une zone 42 d'affaiblissement, ici sensiblement circulaire, de l'optique 4, entre le fond de la rainure 40 et la surface 16 de sortie.

On notera que la source 2 lumineuse peut être formée par une pluralité de sources lumineuses, correspondant avantageusement à des diodes électroluminescentes (LED selon l'acronyme anglais).

Le support 6 peut avantageusement correspondre à un circuit imprimé, par exemple un PCB ou MCPCB, destiné à supporter les diodes électroluminescentes et à les relier électriquement. Alternativement, le support est distinct d'un tel circuit imprimé et le supporte.

Le support 6 peut présenter une forme de plaque, dont une face supporte l'optique 4 et dont l'autre face reçoit le dissipateur 32 thermique.

La ou les sources 2 lumineuses sont agencées entre l'optique 4 et le support 6.

Le cas échéant, les sources 2 lumineuses s'étendent autour de la tige 8 mobile, par exemple en formant un cercle. Les sources 2 lumineuses peuvent être agencées en regard de la rainure 40.

Comme illustré sur la figure 1, la tige 8 peut comprendre des moyens d'entraînement en rotation, qui peuvent être agencés sur une surface supérieure de la tête 10 d'appui, par exemple un trou 44 à méplats destiné à recevoir un outil amovible comme un tournevis.

Bien entendu, l'invention n'est nullement limitée au mode de réalisation décrit ci-dessus, ce mode de réalisation n'ayant été donné qu'à titre d'exemple. Des modifications sont possibles, notamment du point de vue de la constitution des divers éléments ou par la substitution d'équivalents techniques, sans sortir pour autant du domaine de protection de l'invention.

## Revendications

1. Luminaire (1) à photométrie ajustable, comprenant une source (2) lumineuse, une optique (4) déformable, un support (6) destiné à supporter l'optique (4), et des moyens de déformation de l'optique (4), **caractérisé en ce que** les moyens de déformation comprennent une tige (8) mobile par rapport au support (6), la tige (8) mobile comprenant une tête (10) d'appui conformée pour appuyer contre l'optique (4) lorsque la tige (8) est déplacée par rapport au support (6), **en ce que** l'optique (4) comprend une surface (12) de contre-appui contre laquelle est destinée à venir en appui la tête (10) d'appui, et **en ce que** l'optique (4) comprend un alésage (14) à l'intérieur duquel s'étend la tige (8) mobile.

2. Luminaire (1) selon la revendication 1, **caractérisé en ce que** l'optique (4) comprend une surface (16) de sortie, par laquelle la lumière émise par la source (2) lumineuse est destinée à sortir du luminaire (1), et l'alésage (14) ménagé dans l'optique (4) est sensiblement agencé au centre de la surface (16) de sortie.

3. Luminaire (1) selon la revendication 1 ou 2, **caractérisé en ce que** l'alésage (14) ménagé dans l'optique comprend un épaulement (24) délimitant la surface (12) de contre-appui, et l'alésage (14) est conformé pour contenir intégralement la tête (10) d'appui.

4. Luminaire (1) selon l'une des revendications 1 à 3, **caractérisé en ce que** l'optique (4) comprend une surface (18) de maintien en appui permanent contre le support (6), la surface (18) de maintien étant opposée à la surface (16) de sortie et à la surface (12) de contre-appui.

5. Luminaire (1) selon l'une des revendications 1 à 4, **caractérisé en ce que** la tige (8) comprend un premier filetage et le luminaire (1) comprend un deuxième filetage destiné à coopérer avec le premier filetage pour provoquer le déplacement de la tige (8).

6. Luminaire (1) selon l'une des revendications 1 à 5, **caractérisé en ce que** l'alésage (14) de l'optique (4) est traversant, et le support (6) comprend un alésage (30) coaxial avec l'alésage (14) ménagé dans l'optique (4), la tige (8) mobile étant destinée à s'étendre dans l'alésage (30) du support (6).

7. Luminaire (1) selon l'une des revendications 1 à 6, **caractérisé en ce que** le luminaire (1) comprend un dissipateur (32) thermique, et le dissipateur (32) thermique comprend un alésage (34) coaxial avec l'alésage (14) ménagé dans l'optique (4), et la tige (8) mobile est destinée à s'étendre dans l'alésage (14) du dissipateur (32) thermique.

8. Luminaire (1) selon la revendication 7, **caractérisé en ce que** le dissipateur (32) thermique comprend une pluralité d'éléments (36) longitudinaux de dissipation thermique destinés à augmenter la surface d'échange thermique, et la pluralité d'éléments (36) longitudinaux de dissipation thermique délimite entre ces éléments (36) un espace agencé dans le prolongement de l'alésage (34) du dissipateur (32) thermique pour permettre à une extrémité (38) de la tige (8) mobile d'être déplacée entre ces éléments (36).

9. Luminaire (1) selon l'une des revendications 1 à 8, **caractérisé en ce que** l'optique (4) est conformée pour délimiter avec le support (6) une cavité à l'intérieur de laquelle est destinée à être agencée la source (2) lumineuse.

10. Luminaire (1) selon la revendication 9, **caractérisé en ce que** l'optique (4) comprend une rainure (40) s'étendant à l'intérieur de la cavité formée entre l'optique (4) et le support (6).
